# EUROPEAN PATENT SPECIFICATION

(11) **EP 3 163 220 B1**
(45) Date of publication and mention of the grant of the patent: **16.09.2020**
(21) Application number: 15811744.0
(22) Date of filing: 18.05.2015
(51) Int. Cl.: F25B 1/00, F25B 49/02

(54) **HEAT PUMP TYPE CHILLER**
WÄRMEPUMPENARTIGE KÄLTEANLAGE
SYSTÈME FRIGORIFIQUE DE TYPE À POMPE À CHALEUR

(30) Priority: 24.06.2014 JP 2014129488
(43) Date of publication of application: 03.05.2017
(73) Proprietor: Yanmar Power Technology Co., Ltd., Osaka City (JP)
(72) Inventor: KANAYA Yoshihisa, Osaka-shi Osaka 530-0014 (JP); HORIBE Masaya, Osaka-shi Osaka 530-0014 (JP); OTSUKA Shinichi, Osaka-shi Osaka 530-0014 (JP)
(74) Representative: Poindron, Cyrille
(86) International application number: PCT/JP2015/064167
(87) International publication number: WO 2015/198751

(56) References cited:
- WO-A1-2009/085937
- JP-A- H1 078 266
- JP-A- S60 259 866
- JP-A- 2009 036 485
- JP-A- 2009 174 769
- JP-A- 2009 204 246
- JP-A- 2009 204 246
- JP-A- 2014 052 122
- US-A- 4 535 598
- US-A- 6 041 605

## Description

### [Technical Field]

The present invention relates to a heat pump chiller which cools a liquid to be cooled, by heat exchange with a refrigerant circulating in a refrigeration cycle.

### [Background Art]

As a conventional heat pump chiller, PTL 1 discloses a chiller employing a refrigerator, with an anti-freezing system as illustrated in FIG. 5. The chiller in PTL 1 performs a refrigeration cycle through a compressor 501, a condenser 502, an expansion valve 503, and an evaporator 504, and cools a liquid to be cooled by heat exchange with a refrigerant circulating in the refrigeration cycle. The liquid to be cooled is caused to circulate in a closed circuit between the evaporator (a heat exchanger) 504 and a cold-water tank 510 by a circulation pump 520.

The chiller disclosed in PTL 1 is provided with a liquid solenoid valve 505 on the inlet side of the expansion valve 503. At start-up, the temperature on the inlet side of the liquid solenoid valve 505 is monitored by a first temperature sensor 506. If the temperature detected by the first temperature sensor 506 is equal to or lower than a first setup value, a bypass valve 507 is opened, with the liquid solenoid valve 505 closed, so that the refrigerant discharged from the compressor 501 is bypassed to the outlet side of the expansion valve 503. The bypassed refrigerant does not circulate through the refrigeration cycle, so that circulating water (the liquid to be cooled) supplied from the cold-water tank 510 is prevented from freezing in the evaporator (the heat exchanger) 504.

### [Citation List]

### [Patent Literature]

[PTL 1] JP 5098472 B2 US 4 535 598 A discloses a safety control system for sensors in a refrigeration system including a compressor, a condenser, and an evaporator, comprising: sensor means for sensing an operating condition and for generating a signal in response to the operating condition, said sensor means having a first prescribed operating range prior to startup wherein any signal generated outside said first prescribed range indicates a malfunction of said sensor means and a second prescribed operating range during system operation wherein any -preselected number of consecutive signals generated outside said second prescribed range indicates a malfunction of said sensor means; processor means connected to said sensor means for monitoring generated signals from said sensor means and for determining whether the signals are within respective said first and said second prescribed operating ranges, said processor means further generating a first alarm signal when a monitored signal falls outside said first prescribed operating range prior to startup, and generating a second alarm signal when any monitored preselected number of consecutive signals falls outside said second prescribed operating range during system operation, and safety means connected to said processor means for receiving said first and said second alarm signals for aborting startup upon receiving said first alarm signal, and for shutting down said system upon receiving said second alarm signal, whereby shutdowns of said refrigeration system due to malfunctioning senosors is eliminated.

### [Summary of Invention]

### [Technical Problem]

However, the chiller of PTL 1 drives the compressor 501 without checking whether the circulation pump 520 is driven or not. If a trouble in the circulation pump 520 has hampered the flow of circulating water, or in other like situations, circulating water may freeze in the evaporator (the heat exchanger) 504.

An object of the present invention is to provide a heat pump chiller which can prevent freezing of a liquid to be cooled, even if a circulation pump has or may have a trouble, or in other like situations.

### [Solution to Problem]

In order to accomplish this object, a heat pump chiller according to the present invention has following characteristics. The heat pump chiller includes a refrigerant circuit which executes a refrigeration cycle by allowing a refrigerant to circulate sequentially through a compressor, a refrigerant/air heat exchanger, an expansion valve, and a refrigerant/circulating liquid heat exchanger; and a circulating liquid circuit which circulates a circulating liquid to be cooled by heat exchange in the refrigerant/circulating liquid heat exchanger, the circulating liquid circuit being provided with a circulation pump. At start-up of the heat pump chiller, a control unit of the heat pump chiller turns on a feed circuit of the circulation pump, and if, within a predetermined time thereafter, the control unit receives a predetermined signal indicating normal operation of the circulating liquid circuit, the control unit starts the compressor. If the control unit does not receive the predetermined signal within the predetermined time, the control unit turns off the feed circuit of the circulation pump and stops starting the compressor. The heat pump chiller according to the present invention further includes: a flow switch which turns on when detecting a flow of the circulating liquid in the circulating liquid circuit; a thermal relay which turns off when detecting that a temperature of the circulation pump gets higher than a predetermined temperature; and temperature sensors provided in the circulating liquid circuit, one each, at an inlet, an outlet, and a surface of an evaporator for the circulating liquid. If the control unit detects that at least either of the flow switch or the thermal relay has turned off, the control unit may turn off the feed circuit of the circulation pump and may stop the compressor. If the control unit detects that a temperature detected by any one of the three temperature sensors is equal to or lower than a predetermined temperature, the control unit mav stop the compressor while keeping the feed circuit of the circulation pump being turned on.

The thus configured chiller does not start the compressor in the refrigerant circuit unless the control unit confirms, by receiving the predetermined signal, that the circulation pump may be kept driving. Eventually, the chiller can prevent freezing of the circulating liquid caused by stagnation of the circulating liquid in the refrigerant/circulating liquid heat exchanger.

In this heat pump chiller, the predetermined signal comprises a plurality of predetermined signals including:
(1) a signal indicating that the circulation pump operates normally;
(2) a signal indicating that a temperature of the circulating liquid is monitored normally; and
(3) a signal indicating that the circulation pump is not overloaded. Failure to receive any one of the predetermined signals may cause the control unit to turn off the feed circuit of the circulation pump and to stop starting the compressor.

By confirming the signal (1), the chiller can prevent freezing of a stagnant circulating liquid. By confirming the signal (2), the chiller can prevent supercooling and freezing of the circulating liquid due to a failure to monitor the temperature of the circulating liquid. By confirming the signal (3), the chiller can prevent freezing of the circulating liquid due to bad circulation of the circulating liquid in the overloaded circulation pump.

According to this configuration, if the control unit detects no flow of the circulating liquid or detects overloading in the circulation pump, the control unit stops the compressor and the circulation pump. If the control unit detects that the circulating liquid is nearly freezing, the control unit stops the compressor but keeps driving the circulation pump. Eventually, the chiller can more securely prevent freezing of the circulating liquid in the refrigerant/circulating liquid heat exchanger.

### [Advantageous Effects of Invention]

The heat pump chiller according to the present invention does not start the compressor in the refrigerant circuit unless the control unit confirms, by receiving the predetermined signal, that the circulation pump may be kept driving. Hence, this heat pump chiller presents an advantageous effect of preventing freezing of the circulating liquid in the case where the circulation pump has or may have a trouble, or in other like situations.

### [Brief Description of Drawings]

FIG. 1 is a block diagram showing a schematic configuration of a heat pump chiller according to the present embodiment.
FIG. 2 is a circuit diagram of an interlock mechanism in the heat pump chiller according to the present embodiment.
FIG. 3 is a time chart showing a start-up sequence of the heat pump chiller according to the present embodiment.
FIG. 4 is a performance table of the heat pump chiller in operation according to the present embodiment.

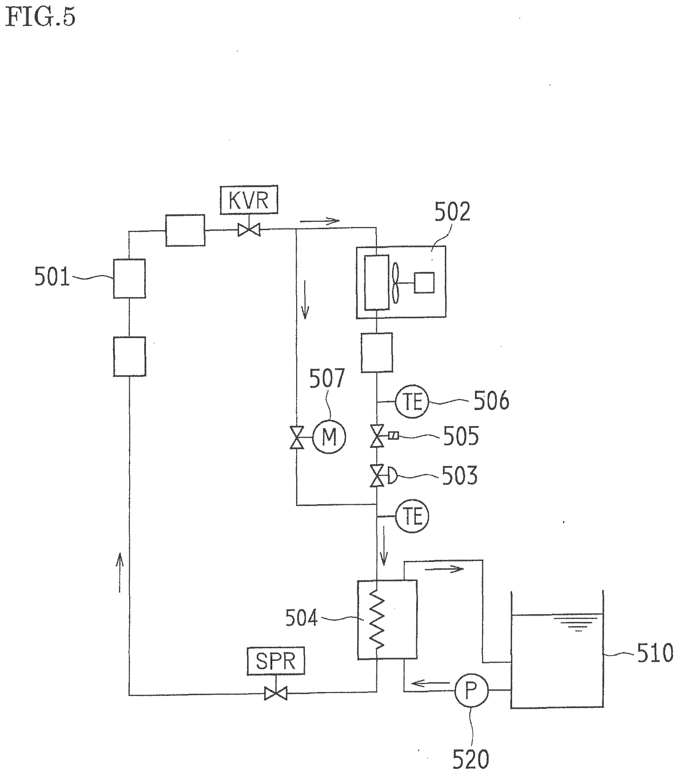

FIG. 5 is a block diagram showing a schematic configuration of a conventional heat pump chiller.

### [Description of Embodiments]

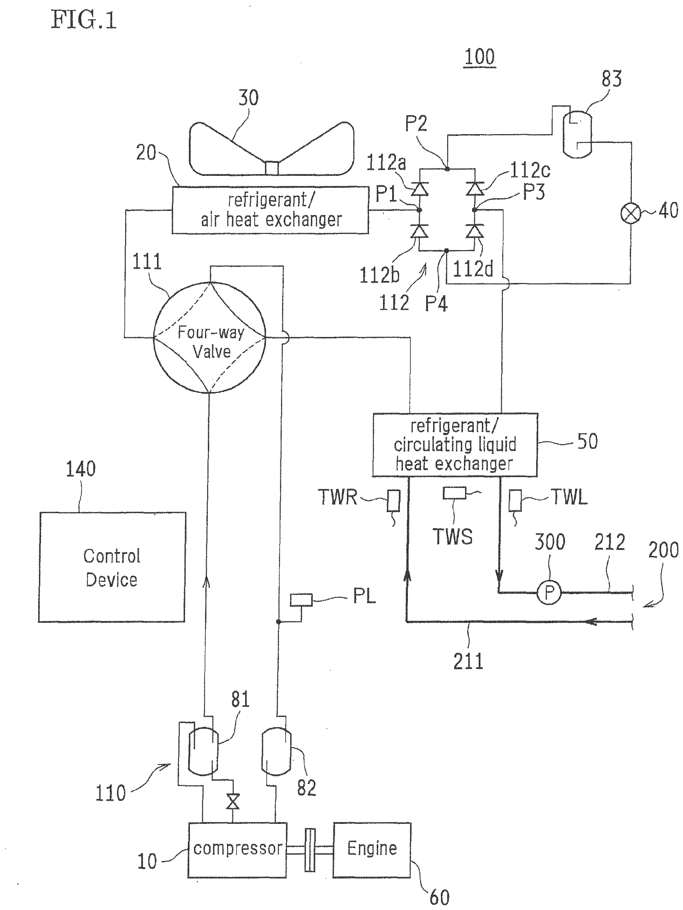

Hereinafter, an embodiment according to the present invention is described with reference to the drawings. FIG. 1 is a block diagram showing a schematic configuration of a heat pump chiller (hereinafter simply called "chiller") 100 according to the present embodiment. Roughly speaking, the chiller 100 includes a refrigerant circuit 110 for circulating a refrigerant and a circulating liquid circuit 200 for circulating a circulating liquid. A control device (control unit)140 controls the entire operation of the chiller 100.

The refrigerant circuit 110 is composed of a compressor 10, a refrigerant/air heat exchanger 20, an expansion valve 40, and a refrigerant/circulating liquid heat exchanger 50. The chiller 100 executes a refrigeration cycle by circulating the refrigerant sequentially through the compressor 10, the refrigerant/air heat exchanger 20, the expansion valve 40, and the refrigerant/circulating liquid heat exchanger 50. The chiller 100 cools the circulating liquid by heat exchange in the refrigerant/circulating liquid heat exchanger 50 (heat exchange between the circulating liquid and the refrigerant) (cooling operation).

In the refrigerant circuit 110, the compressor 10 compresses the refrigerant sucked therein, and discharges the compressed refrigerant. The refrigerant/air heat exchanger 20 exchanges heat between the refrigerant and air (specifically, external air). The expansion valve 40 causes expansion of the refrigerant which has been compressed in the compressor 10. The refrigerant/circulating liquid heat exchanger 50 exchanges heat between the circulating liquid and the refrigerant. The compressor 10 may be composed of a plurality of compressors connected in parallel. Similarly, the refrigerant/air heat exchanger 20 may be composed of a plurality of refrigerant/air heat exchangers connected in parallel.

The opening rate of the expansion valve 40 can be adjusted by a command signal from the control device 140. In this manner, the expansion valve 40 can regulate the amount of the refrigerant circulating in the refrigerant circuit 110. To be specific, the expansion valve 40 is composed of a plurality of closable expansion valves connected in parallel. The thus configured expansion valve 40 can regulate the amount of the refrigerant in the refrigerant circuit 110 by changing the combination of open expansion valves.

In the chiller 100 shown in FIG. 1, a fan 30 for the refrigerant/air heat exchanger is provided for efficient heat exchange in the refrigerant/air heat exchanger 20. An engine 60 is provided as a drive source for driving the compressor 10. In the present invention, however, the drive source for driving the compressor 10 is not limited to an engine but may also be a different drive source (for example, a motor).

The chiller 100 according to the present embodiment is configured to execute not only cooling operation but also heating operation. For this purpose, the chiller 100 is equipped with a four-way valve 111 on the refrigerant discharge side from the compressor 10, and is also equipped with a bridge circuit 112.

In response to a command signal from the control device 140, the four-way valve 111 changes the direction of the refrigerant flow in the cooling operation and in the heating operation. In the cooling operation, the four-way valve 111 connects an inlet port (the bottom port in FIG. 1) to a first connection port (the left port in FIG. 1), and connects a second connection port (the right port in FIG. 1) to an outlet port (the top port in FIG. 1) (the solid path in FIG. 1). In the heating operation, the four-way valve 111 connects the inlet port (the bottom port in FIG. 1) with the second connection port (the right port in FIG. 1), and connects the first connection port (the left port in FIG. 1) with the outlet port (the top port in FIG. 1) (the dashed path in FIG. 1).

The bridge circuit 112 automatically changes the direction of the refrigerant flow between in the heating operation and in the cooling operation. The bridge circuit 112 is provided with four check valves (a first check valve 112a, a second check valve 112b, a third check valve 112c, and a fourth check valve 112d). The first check valve 112a and the second check valve 112b are connected in series, as a first check valve train, such that the refrigerant flows in the same direction. The third check valve 112c and the fourth check valve 112d are connected in series, as a second check valve train, such that the refrigerant flows in the same direction. The first check valve train and the second check valve train are connected in parallel such that the refrigerant flows in the same direction.

In the bridge circuit 112, the connection point between the first check valve 112a and the second check valve 112b is a first interconnection point P1. The connection point between the first check valve 112a and the third check valve 112c is an outlet connection point P2. The connection point between the third check valve 112c and the fourth check valve 112d is a second interconnection point P3. The connection point between the second check valve 112b and the fourth check valve 112d is an inlet connection point P4.

In the cooling operation, the chiller 100 executes a refrigeration cycle by allowing the refrigerant to flow from the compressor 10, through the four-way valve 111, the refrigerant/air heat exchanger 20, the bridge circuit 112 (from P1 to P2), the expansion valve 40, the bridge circuit 112 (from P4 to P3), the refrigerant/circulating liquid heat exchanger 50, the four-way valve 111, and back to the compressor 10. In the heating operation, the chiller 100 executes a heating cycle by allowing the refrigerant to flow from the compressor 10, through the four-way valve 111, the refrigerant/circulating liquid heat exchanger 50, the bridge circuit 112 (from P3 to P2), the expansion valve 40, the bridge circuit 112 (from P4 to P1), the refrigerant/air heat exchanger 20, the four-way valve 111, and back to the compressor 10.

In the present embodiment, the chiller 100 is further equipped with an oil separator 81, an accumulator 82, and a receiver 83. The oil separator 81 separates lubricating oil for the compressor 10 contained in the refrigerant, and returns the separated lubricating oil back to the compressor 10. The accumulator 82 separates refrigerant liquid that does not evaporate completely in the refrigerant/circulating liquid heat exchanger 50 or the refrigerant/air heat exchanger 20, each serving as an evaporator. The receiver 83 temporarily stores a highpressure liquid refrigerant from the bridge circuit 112.

The chiller 100 according to the present embodiment, equipped with the four-way valve 111 and the bridge circuit 112, is switchable between the cooling operation and the heating operation. Having said that, a feature of the present invention resides in actions in the cooling operation. Hence, the present invention is also applicable to a chiller which can execute cooling operation only.

Next, the circulating liquid circuit 200 is described. In the cooling operation, a circulating liquid flowing in the circulating liquid circuit 200 serves as a liquid to be cooled by heat exchange in the refrigerant/circulating liquid heat exchanger 50. In the heating operation, the circulating liquid serves as a liquid to be heated by heat exchange in the refrigerant/circulating liquid heat exchanger 50. The circulating liquid is utilized as cold water or hot water for a building air-conditioning system or the like. In the present invention, the circulating liquid is water, but should not be limited thereto, and may also be a water-based solution containing an antifreeze or the like.

The circulating liquid circuit 200 includes an inlet pipe 211, an outlet pipe 212, and a circulation pump 300. The circulating liquid is introduced through the inlet pipe 211 into the refrigerant/circulating liquid heat exchanger 50, and has its temperature adjusted in the refrigerant/circulating liquid heat exchanger 50. The temperature-adjusted circulating liquid is discharged from the chiller 100 through the outlet pipe 212. Basically, the circulating liquid circuit 200 in the chiller 100 constitutes only a part of the closed circuit through which the circulating liquid flows. Namely, in the case where the chiller 100 according to the present embodiment is employed in a building air-conditioning system, the circulating liquid circuit in the air-conditioning system and the circulating liquid circuit 200 in the chiller 100 are connected to form a closed circuit, and the circulating liquid flows in this closed circuit. The circulation pump 300 is a pump for circulating the circulating liquid in the closed circuit. In the configuration shown in FIG. 1, the circulation pump 300 is provided in the outlet pipe 212, but may be provided in the inlet pipe 211 instead.

In order to prevent freezing of the circulating liquid in the cooling operation, the chiller 100 according to the present embodiment is provided with an inlet circulating liquid temperature sensor TWR, an outlet circulating liquid temperature sensor TWL, a heat exchanger surface temperature sensor TWS, and a pressure sensor PL.

The inlet circulating liquid temperature sensor TWR is provided in the inlet pipe 211, and detects the temperature of the circulating liquid flowing into the refrigerant/circulating liquid heat exchanger 50 (specifically, the circulating liquid in the inlet pipe 211). The outlet circulating liquid temperature sensor TWL is provided in the outlet pipe 212, and detects the temperature of the circulating liquid flowing out of the refrigerant/circulating liquid heat exchanger 50 (specifically, the circulating liquid in the outlet pipe 212). The heat exchanger surface temperature sensor TWS is provided at the surface of the refrigerant/circulating liquid heat exchanger 50, and detects the surface temperature of the refrigerant/circulating liquid heat exchanger 50. The pressure sensor PL is provided in a refrigerant suction path to the compressor 10, and detects the pressure of the refrigerant flowing out of the refrigerant/circulating liquid heat exchanger 50. The pressure detected by the pressure sensor PL is converted into the refrigerant evaporation temperature of the refrigerant flowing out of the refrigerant/circulating liquid heat exchanger 50.

In order to prevent freezing of the circulating liquid during the cooling operation, the control device 140 provides following control, based on detection signals from the sensors. Specifically, if the control device 140 detects that the temperature detected by any of the inlet circulating liquid temperature sensor TWR, the outlet circulating liquid temperature sensor TWL, and the heat exchanger surface temperature sensor TWS, or the refrigerant evaporation temperature converted from the pressure detected by the pressure sensor PL is equal to or lower than the predetermined temperature (for example, 2°C), the control device 140 stops the compressor 10 and activates the circulation pump 300.

Namely, if any one of the above-mentioned four temperatures is equal to or lower than the predetermined temperature (for example, 2°C), the control device 140 judges that continuation of the cooling operation may cause freezing of the circulating liquid, and the control device 140 provides an anti-freezing control. Specifically, the control device 140 stops the compressor 10 so as to stop the refrigeration cycle of the refrigerant circuit 110, and further activates the circulation pump 300 so as to reduce the probability that the circulating liquid may freeze in the circulating liquid circuit 200.

In this regard, the four sensors, i.e. the inlet circulating liquid temperature sensor TWR, the outlet circulating liquid temperature sensor TWL, the heat exchanger surface temperature sensor TWS, and the pressure sensor PL, are provided in order to prevent freezing of a refrigerant which is supercooled in cold climate or in other like conditions, but these sensors have no direct relevance to the anti-freezing function according to the present invention (anti-freezing function by means of an interlock mechanism to be described later). Additionally, the chiller is not necessarily equipped with all of the four sensors.

While the chiller 100 according to the present embodiment performs the cooling operation, the circulation pump 300 must be kept driving all the time. If the compressor 10 keeps on driving even after the circulation pump 300 has stopped due to a trouble, the circulating liquid stagnant in the refrigerant/circulating liquid heat exchanger 50 may be supercooled and frozen.

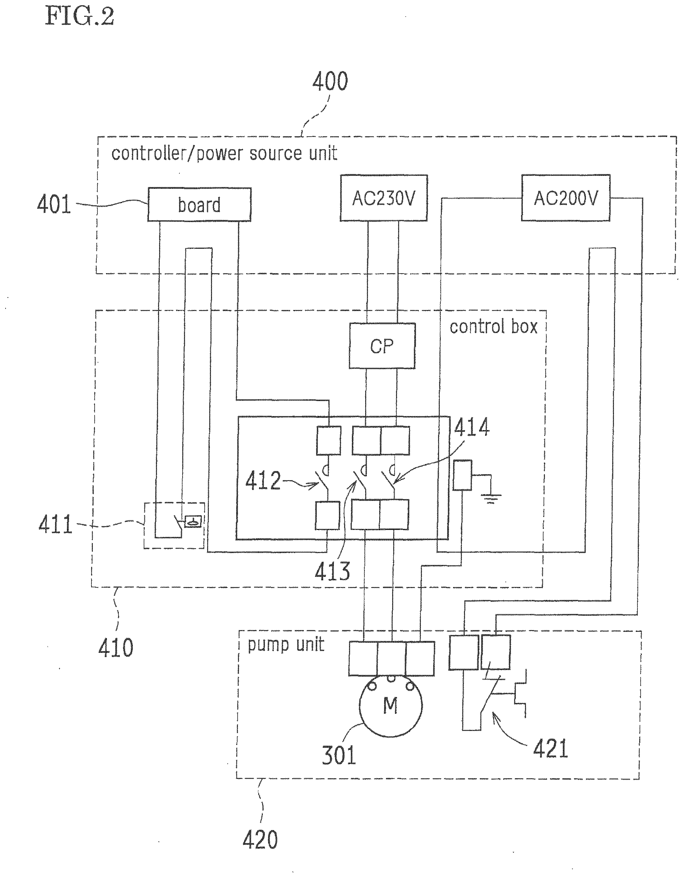

The feature of the present invention resides in the anti-freezing function as described above, by means of an anti-freezing interlock mechanism. The configuration of the interlock mechanism is described below with reference to FIG. 2. In this context, "interlock" means a mechanism that inhibits any other action unless one or more predetermined conditions are met. The chiller 100 in the present embodiment is configured such that, at the start-up of the chiller 100, the compressor 10 cannot start unless the normal operation of the circulating liquid circuit 200 is confirmed. This configuration prevents freezing of the circulating liquid due to a trouble of the circulation pump 300 or other like causes.

As shown in FIG. 2, the interlock mechanism includes a controller/power source unit 400, a control box 410, and a pump unit 420.

The controller/power source unit 400 is provided with a controller board 401 and two kinds of power sources (an AC230V power source and an AC200V power source). In this embodiment, the AC230V power source is provided for driving the circulation pump 300, and the AC200V power source is provided for the sensors and the like.

The control box 410 includes a flow switch 411, a first connection relay 412, a second connection relay 413, and a third connection relay 414. When the circulation pump 300 is driven and creates a flow of the circulating liquid, the flow switch 411 detects the flow and turns on. In other words, when the flow switch 411 is off, the circulation pump 300 is judged to be in a non-driven state. The first connection relay 412 stays in a conduction state while a sensor for monitoring the temperature of the circulating liquid (for example, the inlet circulating liquid temperature sensor TWR mentioned above) is on. It should be noted that turning on and off of the first connection relay 412 depends on whether the sensor (for example, the inlet circulating liquid temperature sensor TWR) is activated, and does not depend on the temperature detected by the sensor. Further, in the case where two or more sensors monitor the temperature of the circulating liquid, the first connection relay 412 is required for each of the sensors. The second connection relay 413 and the third connection relay 414 are connected in series to a motor 301 (the drive source for the circulation pump 300), and supply power to the motor 301 when both relays establish electrical continuity.

The pump unit 420 includes the motor 301 as the drive source for the circulation pump 300, and a thermal relay 421. The thermal relay 421 monitors the temperature of the motor 301, and turns off if the monitored temperature is equal to or higher than a predetermined temperature. In other words, if the thermal relay 421 turns off, the circulation pump 300 is judged to be overloaded.

The controller board 401 is connected to a closed circuit in which the flow switch 411 and the first connection relay 412 are connected in series. When the controller board 401 detects that the closed circuit has established electrical continuity (that an electric current is flowing through the closed circuit), the controller board 401 allows the second connection relay 413 and the third connection relay 414 to establish electrical continuity. In other words, electrical continuity in the closed circuit is detected by the controller board 401 when both the flow switch 411 and the first connection relay 412 have established electrical continuity. In this embodiment, the controller board 401 makes up a part of the control device 140. When electrical continuity is no longer detected in the closed circuit, the control device 140 turns off the second connection relay 413 and the third connection relay 414, and shuts off the power supply to the motor 301. In FIG. 2, the abbreviation CP represents an overcurrent protection relay.

The thermal relay 421 is connected in series to the AC200V power source to constitute a closed circuit. When the thermal relay 421 turns off (when electrical continuity is broken), no electric current flows through the closed circuit. The electric current in the closed circuit is monitored by the control device 140. If no electric current is detected (if the thermal relay 421 has turned off), the control device 140 turns off the second connection relay 413 and the second connection relay 414, and shuts off the power supply to the motor 301.

In summary, the power supply to the motor 301 (driving of the circulation pump 300) continues when all of the following three conditions (a)-(c) are satisfied. If even one of the conditions (a)-(c) is not satisfied, the power supply to the motor 301 is shut off.
(a) The flow switch 411 is on (the circulation pump 300 operates normally).
(b) The first connection relay 412 is on (the temperature of the circulating liquid is monitored normally).
(c) The thermal relay 421 is on (the circulation pump 300 is not overloaded).

Namely, in the present embodiment, the ON signal of the flow switch 411, the ON signal of the first connection relay 412, and the ON signal of the thermal relay 421 correspond to "a predetermined signal indicating normal operation of the circulating liquid circuit" as required in the claims.

Although not shown in FIG. 2, if even one of the conditions (a)-(c) is not satisfied in the interlock mechanism according to the present invention, not only is the power supply to the motor 301 shut off, but also is the start of the compressor 10 stopped. In the present embodiment where the drive source for the compressor 10 is the engine 60, a feasible control for stopping the start of the compressor 10 is to close the gas valve which regulates the fuel supply to the engine 60, or to shut off the power supply to the starter if the engine 60 has not been started yet. In the case where the drive source for the compressor 10 is a motor, the power supply to the motor may be shut off.

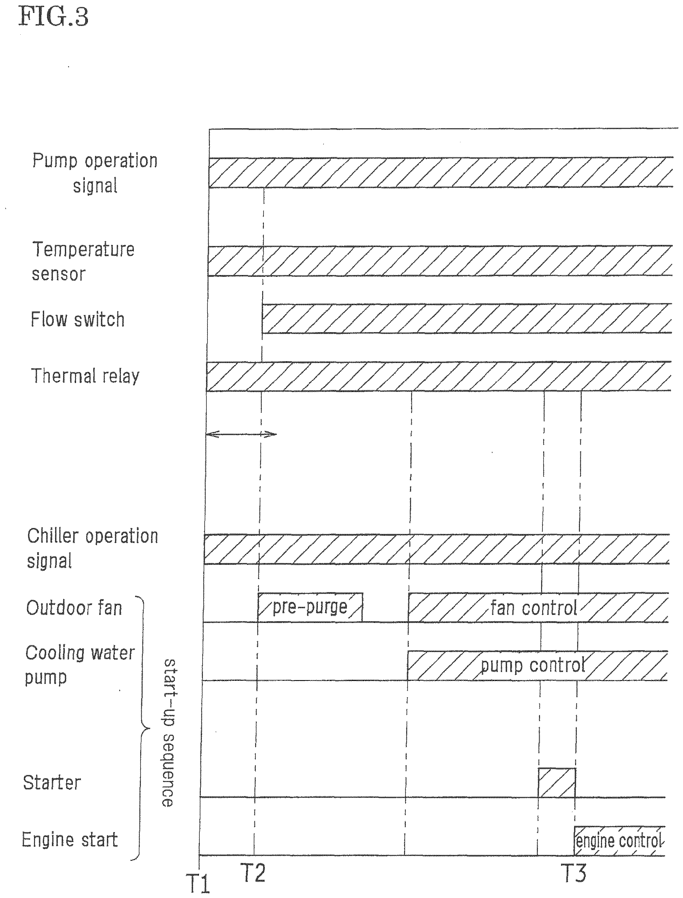

Next, the start-up sequence for the chiller 100 according to the present embodiment is described with reference to the time chart in FIG. 3. In the following description, the inlet circulating liquid temperature sensor TWR is taken as an example of the sensors which monitor the temperature of the circulating liquid (hereinafter, simply called "temperature sensor(s)").

To start the chiller 100, it is necessary to start both the refrigerant circuit 110 for circulating the refrigerant and the circulating liquid circuit 200 for circulating the circulating liquid. Hence, a chiller operation signal is switched on in order to start the refrigerant circuit 110, and a pump operation signal is switched on in order to start the circulating liquid circuit 200 (Time T1). At Time T1, in the normal state, the temperature sensor detects an ON signal, and the thermal relay 421 is also in the ON state. The ON/OFF signal detected by the temperature sensor in FIG. 3 depends on the detected temperature. Specifically, an OFF signal is produced when the detected temperature is 2°C or lower, and ON signal is produced when the detected temperature is higher than 2°C.

The pump operation signal which is turned on at Time T1 allows the circulation pump 300 to start driving, and allows the circulating liquid to start circulating in the circulating liquid circuit 200. The flow switch 411 detects the flow of the circulating liquid, and turns on at Time T2.

On the other hand, when the chiller operation signal is turned on at Time T1, the refrigerant circuit 110 does not start immediately because the flow switch 411 has not yet turned on at Time T1. When the flow switch 411 turns on at Time T2, the start-up sequence of the refrigerant circuit 110 begins.

As the first step of this start-up sequence, the outdoor fan is started to conduct pre-purge. The outdoor fan is a chiller ventilation fan, but may also serve as the fan 30 for the refrigerant/air heat exchanger. On completion of the pre-purge, fan control for the outdoor fan and drive control for the cooling water pump (a pump for circulating cooling water for the engine 60) are started. Later, the starter of the engine 60 is driven to start up the engine 60 at Time T3. Namely, the start-up of the engine 60 at Time T3 causes the compressor 10 to start driving (the start of the refrigerant circuit 110).

While the chiller 100 conducts the cooling operation, failure to satisfy any one of the above three conditions (a)-(c) leads to suspension of the operation of the chiller 100. Namely, the operation of the chiller 100 is suspended by turning off the chiller operation signal and the pump operation signal, stopping the circulation pump 300 in the circulating liquid circuit 200, and stopping the compressor 10 in the refrigerant circuit 110 through an engine suspension sequence. After the suspension of the operation of the chiller 100, if the conditions (a)-(c) are satisfied again, the operation of the chiller 100 is resumed in the same start-up sequence as above.

Regarding the temperature sensor, if the temperature detected by the temperature sensor is equal to or lower than the predetermined temperature (for example, 2°C), only the compressor 10 is stopped and the circulation pump 300 is not stopped. Detection of the temperature equal to or lower than the predetermined temperature (for example, 2°C) by the temperature sensor indicates that the temperature of the circulating liquid is falling closer to the freezing temperature. Hence, the circulation pump 300 is kept in operation so as to maintain the flow of the circulating liquid and to prevent freezing of the circulating liquid. In the case where two or more temperature sensors are provided, the condition "if the temperature detected by the temperature sensor is equal to or lower than the predetermined temperature" means that the temperature detected by even one of the temperature sensors is equal to or lower than the predetermined temperature. On the other hand, the condition "if the temperature detected by the temperature sensor is higher than the predetermined temperature" means that the temperatures detected by all of the temperature sensors are higher than the predetermined temperature.

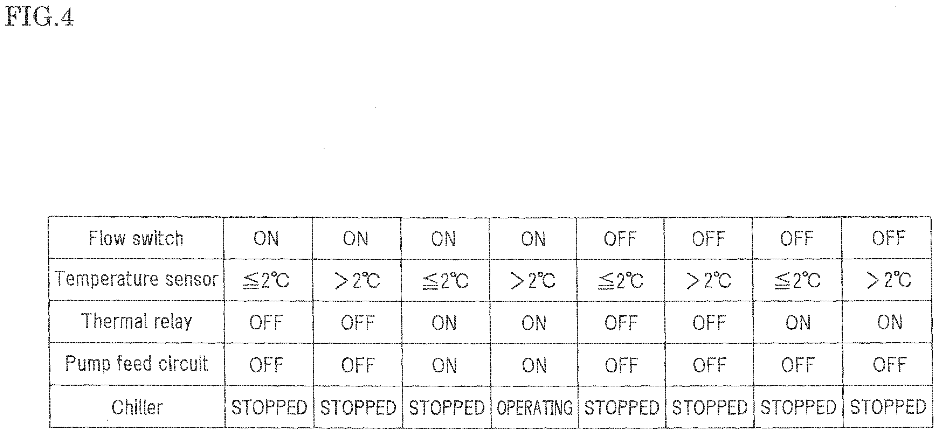

FIG. 4 summarizes the actions of the chiller 100 in operation, according to the above description.

In the case where the flow switch 411 turns off while the chiller 100 is in operation, the circulation pump 300 is not operating normally, and continuation of the operation of the chiller 100 may lead to freezing of the circulating liquid. Hence, the pump feed circuit is turned off and the compressor 10 is stopped. If the thermal relay 421 turns off while the chiller 100 is in operation, the circulation pump 300 is judged to be overloaded. Likewise, the pump feed circuit is turned off and the compressor 10 is stopped.

Even when both the flow switch 411 and the thermal relay 421 are in the ON state, if the temperature detected by the temperature sensor is 2°C or lower, only the compressor 10 is stopped, and the circulation pump 300 is kept driving. In other words, the chiller 100 is driven normally only when both the flow switch 411 and the thermal relay 421 are in the ON state and when the temperature detected by the temperature sensor is higher than 2°C.

The present invention can be embodied and practiced in other different forms without departing from the spirit and essential characteristics of the present invention. Therefore, the above-described embodiment is considered in all respects as illustrative and not restrictive. The scope of the invention is indicated by the appended claims rather than by the foregoing description.

### [Reference Signs List]

- 10: compressor
- 20: refrigerant/air heat exchanger
- 30: fan for the refrigerant/air heat exchanger
- 40: expansion valve
- 50: refrigerant/circulating liquid heat exchanger
- 60: engine
- 100: heat pump chiller
- 110: refrigerant circuit
- 140: control device (control unit)
- 200: circulating liquid circuit
- 300: circulation pump
- 301: motor
- 400: controller/power source unit
- 410: control box
- 411: flow switch
- 412: first connection relay
- 413: second connection relay
- 414: third connection relay
- 420: pump unit
- 421: thermal relay
- TWR: inlet circulating liquid temperature sensor
- TWL: outlet circulating liquid temperature sensor
- TWS: heat exchanger surface temperature sensor

## Claims

1. A heat pump chiller (100) comprising: a refrigerant circuit (110) comprising a refrigerant, a compressor (10), a refrigerant/air heat exchanger (20), an expansion valve (40) and a refrigerant/circulating liquid heat exchanger (50), and which executes a refrigeration cycle by allowing the refrigerant to circulate sequentially through the compressor (10), the refrigerant/air heat exchanger (20), the expansion valve (40) and the refrigerant/circulating liquid heat exchanger (50); and a circulating liquid circuit (200) which circulates a circulating liquid to be cooled by heat exchange in the refrigerant/circulating liquid heat exchanger (50), the circulating liquid circuit (200) being provided with a circulation pump (300),
wherein, at start-up of the heat pump chiller (100), a control unit (140) of the heat pump chiller (100) is configured to turn on a feed circuit of the circulation pump (300), and if, within a predetermined time thereafter, the control unit (140) receives a predetermined signal indicating normal operation of the circulating liquid circuit (200), the control unit (140) is configured to start the compressor (10), and
wherein, if the control unit (140) does not receive the predetermined signal within the predetermined time, the control unit (140) is configured to turn off the feed circuit of the circulation pump (300) and to stop starting the compressor (10), and
further comprising: a flow switch (411) which is configured to turn on when detecting a flow of the circulating liquid in the circulating liquid circuit (200); a thermal relay (421) which is configured to turn off when detecting that a temperature of the circulation pump (300) gets higher than a predetermined temperature; temperature sensors (TWR,TWL,TWS) provided in the circulating liquid circuit (200), one each, at an inlet, an outlet, and a surface of an evaporator for the circulating liquid,
wherein, if the control unit (140) detects that at least either of the flow switch (411) or the thermal relay (421) has turned off, the control unit (140) is configured to turn off the feed circuit of the circulation pump (300) and to stop the compressor (10), and
wherein, if the control unit (140) detects that a temperature detected by any one of the three temperature sensors (TWR,TWL,TWS) is equal to or lower than a predetermined temperature, the control unit (140) is configured to stop the compressor (10) while keeping the feed circuit of the circulation pump (300) being turned on.

2. The heat pump chiller (100) according to claim 1,
wherein the predetermined signal comprises a plurality of predetermined signals including:
(1) a signal indicating that the circulation pump (300) operates normally;
(2) a signal indicating that a temperature of the circulating liquid is monitored normally; and
(3) a signal indicating that the circulation pump (300) is not overloaded, and
wherein failure to receive any one of the predetermined signals the configuration of the control unit (140)causes the control unit (140) to turn off the feed circuit of the circulation pump (300) and to stop starting the compressor (10).

## Patentansprüche

1. Wärmepumpenkältemaschine (100) die Folgendes umfasst: einen Kältemittelkreis (110), der ein Kältemittel umfasst, einen Verdichter (10), einen Kältemittel-/Luftwärmetauscher (20), ein Expansionsventil (40) und einen Wärmetauscher (50) für Kältemittel bzw. zirkulierende Flüssigkeit und die einen Kühlzyklus ausführt, indem sie es erlaubt, dass Kältemittel sequenziell durch den Verdichter (10), den Kältemittel-/Luftwärmetauscher (20), das Expansionsventil (40) und den Wärmetauscher (50) für Kältemittel bzw. zirkulierende Flüssigkeit zirkuliert; und einen Kreis (200) für zirkulierende Flüssigkeit, der eine zirkulierende Flüssigkeit, die durch Wärmeaustausch im Wärmetauscher (50) für Kältemittel bzw. zirkulierende Flüssigkeit zu kühlen ist, zirkuliert, wobei der Kreis (200) für zirkulierende Flüssigkeit mit einer Umwälzpumpe (300) versehen ist,
wobei beim Starten der Wärmepumpenkältemaschine (100) eine Steuereinheit (140) der Wärmepumpenkältemaschine (100) dazu ausgelegt ist, eine Speiseschaltung der Umwälzpumpe (300) einzuschalten, und, wenn die Steuereinheit (140) innerhalb einer vorbestimmten Zeit danach ein vorbestimmtes Signal empfängt, das den Normalbetrieb des Kreises (200) für zirkulierende Flüssigkeit anzeigt, die Steuereinheit (140) dazu ausgelegt ist, den Verdichter (10) zu starten, und
wobei, wenn die Steuereinheit (140) das vorbestimmte Signal nicht innerhalb der vorbestimmten Zeit empfängt, die Steuereinheit (140) dazu ausgelegt ist, die Speiseschaltung der Umwälzpumpe (300) abzuschalten und das Starten des Verdichters (10) zu beenden, und
ferner Folgendes umfasst: einen Durchflussschalter (411), der dazu ausgelegt ist, einzuschalten, wenn er einen Fluss der zirkulierenden Flüssigkeit im Kreis (200) für zirkulierende Flüssigkeit detektiert; ein Wärmerelais (421), das dazu ausgelegt ist, abzuschalten, wenn es detektiert, dass eine Temperatur der Umwälzpumpe (300) höher wird als eine vorbestimmte Temperatur; Temperatursensoren (TWR,TWL,TWS), die jeweils an einem Einlass, einem Auslass und einer Fläche eines Verdampfers für die zirkulierende Flüssigkeit im Kreis (200) für zirkulierende Flüssigkeit bereitgestellt sind,
wobei, wenn die Steuereinheit (140) detektiert, dass mindestens eines des Durchflussschalters (411) oder des Wärmerelais (421) abgeschaltet hat, die Steuereinheit (140) dazu ausgelegt ist, die Speiseschaltung der Umwälzpumpe (300) abzuschalten und den Verdichter (10) zu stoppen, und
wobei, wenn die Steuereinheit (140) detektiert, dass eine Temperatur, die von einem der drei Temperatursensoren (TWR,TWL,TWS) detektiert wird, gleich oder niedriger ist als eine vorbestimmte Temperatur, die Steuereinheit (140) dazu ausgelegt ist, den Verdichter (10) zu stoppen, während die Speiseschaltung der Umwälzpumpe (300) eingeschaltet bleibt.

2. Wärmepumpenkältemaschine (100) nach Anspruch 1, wobei das vorbestimmte Signal eine Vielzahl von vorbestimmten Signalen umfasst, die Folgendes beinhalten:
(1) ein Signal, das anzeigt, dass die Umwälzpumpe (300) normal betrieben wird;
(2) ein Signal, das anzeigt, dass eine Temperatur der zirkulierenden Flüssigkeit normal überwacht wird; und
(3) ein Signal, das anzeigt, dass die Umwälzpumpe (300) nicht überlastet ist, und
wobei, wenn keines der vorbestimmten Signale empfangen wird, die Auslegung der Steuereinheit (140) die Steuereinheit (140) veranlasst, die Speiseschaltung der Umwälzpumpe (300) abzuschalten und das Starten des Verdichters (10) zu stoppen.

## Revendications

1. Refroidisseur à pompe à chaleur (100) comprenant : un circuit de réfrigérant (110) comprenant un réfrigérant, un compresseur (10), un échangeur de chaleur réfrigérant/air (20), un détenteur (40), et un échangeur de chaleur réfrigérant/liquide de circulation (50), et qui exécute un cycle de réfrigération en permettant au réfrigérant de circuler séquentiellement à travers le compresseur (10), l'échangeur de chaleur réfrigérant/air (20), le détenteur (40) et l'échangeur de chaleur réfrigérant/liquide de circulation (50) ; et un circuit de liquide de circulation (200) qui fait circuler un liquide de circulation à refroidir par échange de chaleur dans l'échangeur de chaleur réfrigérant/liquide de circulation (50), le circuit de liquide de circulation (200) étant pourvu d'une pompe de circulation (300),
dans lequel, au démarrage du refroidisseur à pompe à chaleur (100), une unité de commande (140) du refroidisseur à pompe à chaleur (100) est configurée pour mettre en marche un circuit d'alimentation de la pompe de circulation (300), et si, dans un temps prédéterminé par la suite, l'unité de commande (140) reçoit un signal prédéterminé indiquant un fonctionnement normal du circuit de liquide de circulation (200), l'unité de commande (140) est configurée pour démarrer le compresseur (10), et
dans lequel, si l'unité de commande (140) ne reçoit pas le signal prédéterminé dans le temps prédéterminé, l'unité de commande (140) est configurée pour éteindre le circuit d'alimentation de la pompe de circulation (300) et pour arrêter le démarrage du compresseur (10), et
comprenant en outre : un interrupteur de débit (411) qui est configuré pour se mettre en marche à la détection d'un débit du liquide de circulation dans le circuit de liquide de circulation (200) ; un relais thermique (421) qui est configuré pour s'éteindre lorsqu'il détecte qu'une température de la pompe de circulation (300) devient plus élevée qu'une température prédéterminée ; des capteurs de température (TWR, TWL, TWS) prévus dans le circuit de liquide de circulation (200), un chacun au niveau d'une entrée, d'une sortie et d'une surface d'un évaporateur pour le liquide de circulation,
dans lequel, si l'unité de commande (140) détecte qu'au moins l'un ou l'autre parmi l'interrupteur de débit (411) et le relais thermique (421) s'est éteint, l'unité de commande (140) est configurée pour éteindre le circuit d'alimentation de la pompe de circulation (300) et pour arrêter le compresseur (10), et
dans lequel, si l'unité de commande (140) détecte qu'une température détectée par l'un quelconque des trois capteurs de température (TWR, TWL, TWS) est égale ou inférieure à une température prédéterminée, l'unité de commande (140) est configurée pour arrêter le compresseur (10) tout en gardant le circuit d'alimentation de la pompe de circulation (300) en marche.

2. Refroidisseur à pompe à chaleur (100) selon la revendication 1,
dans lequel le signal prédéterminé comprend une pluralité de signaux prédéterminés comportant :
(1) un signal indiquant que la pompe de circulation (300) fonctionne normalement ;
(2) un signal indiquant qu'une température du liquide de circulation est surveillée normalement ; et
(3) un signal indiquant que la pompe de circulation (300) n'est pas surchargée, et
dans lequel, en l'absence de réception de l'un quelconque des signaux prédéterminés, la configuration de l'unité de commande (140) amène l'unité de commande (140) à éteindre le circuit d'alimentation de la pompe de circulation (300) et à arrêter le démarrage du compresseur (10).
